# EUROPEAN PATENT APPLICATION

(11) **EP 2 211 556 A1**
(43) Date of publication of application: **28.07.2010**
(21) Application number: 10151448.7
(22) Date of filing: 22.01.2010
(51) Int. Cl.: H04N 13/00, H04N 7/24

(54) **Method for processing non-real time stereoscopic services in terrestrial digital multimedia broadcasting and apparatus for receiving terrestrial digital multimedia broadcasting**

(30) Priority: 22.01.2009 KR 20090005557; 19.08.2009 KR 20090076901; 22.01.2010 KR 20100005984
(71) Applicant: Electronics and Telecommunications Research Institute, Daejeon 305-700 (KR)
(72) Inventor: LEE, Bong Ho, Daejeon 305-250 (KR); YUN, Kug Jin, Daejeon 305-759 (KR); LEE, Hyun, Daejeon 302-120 (KR); LEE, Gwang Soon, Daejeon 305-250 (KR); HUR, Namho, Daejeon 305-325 (KR); KIM, Jin Woong, Daejeon 305-761 (KR); LEE, Soo In, Daejeon 302-120 (KR); KIM, Yong Han, Gyeonggi-Do 463-050 (KR)
(74) Representative: Guéné, Patrick

(57) **Abstract**

A method for performing a non-real-time stereoscopic service in a Terrestrial Digital Multimedia Broadcasting (T-DMB), and a T-DMB receiving apparatus are provided. The T-DMB receiving apparatus may store additional data in a nonvolatile storage device in advance, and may synchronize the stored additional data with reference data transmitted in real-time, to perform a stereoscopic service in a T-DMB service. The stereoscopic service may be performed without increasing transmission rate.

## Description

### [TECHNICAL FIELD]

The present invention relates to a Terrestrial Digital Multimedia Broadcasting (T-DMB) service, and more particularly, to a method and apparatus for performing a stereoscopic service based on additional data and reference data which is transmitted in non-real time.

### [DESCRIPTION OF THE RELATED ART]

A stereoscopic video service may provide a three-dimensional (3D) image based on video data viewed by left and right eyes, and thus viewers may actually perceive more realism. Currently, an attempt is being made to apply the stereoscopic video service to a Terrestrial Digital Multimedia Broadcasting (T-DMB) scheme. Since the stereoscopic video service needs to provide a viewer with both a left eye image and a right eye image, an amount of data to be transmitted should be up to twice that of a monoscopic service. In other words, since there is a limitation in data transmission rate of the T-DMB scheme, it is difficult to provide the stereoscopic video service using the T-DMB scheme. A service for multiplexing additional data with reference data and transmitting the multiplexed data to provide a stereoscopic service is defined as a "real-time" stereoscopic service.

However, the data transmission rate is still limited even when transmitting the additional data along with the reference data and thus, there is a demand for methods to overcome the limitation of a data transmission rate and to perform a stereoscopic service in a T-DMB receiver.

### [SUMMARY OF THE INVENTION]

### [TECHNICAL PROBLEM]

An aspect of the present invention provides an apparatus and method for performing a Terrestrial Digital Multimedia Broadcasting (T-DMB) non-real-time stereoscopic service.

Another aspect of the present invention provides an apparatus and method for downloading and storing additional data for a stereoscopic service in advance, and processing the stored additional data along with reference data transmitted in real-time, to overcome a limitation in data transmission rate.

Still another aspect of the present invention provides an apparatus and method for performing synchronization between additional data and reference data which is transmitted in non-real-time, to prevent degradation in image quality of stereoscopic data.

### [TECHNICAL SOLUTION]

According to an aspect of the present invention, there is provided a method of performing a stereoscopic service in a broadcast receiving apparatus, the method including extracting a Program Map Table (PMT) corresponding to a program selected by a user from a Program Association Table (PAT), the PAT being contained in a Moving Pictures Expert Group part 2 Transport Stream (MPEG-2 TS) which is delived in DMB video channel; analyzing information defined in a stereoscopic service descriptor (SS_descriptor) among descriptors corresponding to the selected program, the descriptors being contained in the PMT; extracting a reference video from the MPEG-2 TS channel based on the descriptors corresponding to the selected program; extracting an additional video, delivered in MOT data channel, from the broadcast receiving apparatus based on the analyzed information, the additional video being stored in advance in the broadcast receiving apparatus; and synchronizing the extracted reference video with the extracted additional video based on the analyzed information at a time when a playback of a stereoscopic video is started, and displaying the synchronized video.

In this instance, the analyzing of the information may include analyzing a service type, the service type defining a type of a stereoscopic service; analyzing a content name, the content name defining a name of a file from which the additional video is to be extracted; and analyzing a Non-Real-Time (NRT) marker, the NRT marker representing a start position of the stereoscopic service for synchronization between the reference video and the additional video.

According to another aspect of the present invention, there is provided a method of performing a stereoscopic service in a broadcast receiving apparatus, the method including extracting a PMT corresponding to a program selected by a user from a PAT, the PAT being contained in a MPEG-2 TS channel; analyzing information defined in a SS_descriptor among descriptors corresponding to the selected program, the descriptors being contained in the PMT; extracting a reference image from the MPEG-2 TS channel based on the descriptors corresponding to the selected program; extracting an additional image, delivered in MOT data channel, from the broadcast receiving apparatus based on the analyzed information, the additional image being stored in advance in the broadcast receiving apparatus; and synchronizing the extracted reference image with the extracted additional image and displaying the synchronously rendered stereoscopic images over the video.

In this instance, the analyzing of the information may include analyzing a service type, the service type defining a type of a stereoscopic service; analyzing an image name, the image name defining a name of a file from which the additional image is to be extracted; and analyzing a SS_image_PID used to define the image name as the name of the file from which the additional image is to be extracted.

According to still another aspect of the present invention, there is provided a method of performing a stereoscopic service in a broadcast receiving apparatus, the method including extracting a PMT corresponding to a program selected by a user from a PAT, the PAT being contained in a MPEG-2 TS to transmit a content, the content being repeatedly transmitted for a predetermined period of time so that a left video and a right video are alternatingly transmitted as a reference video through the MPEG-2 TS channel; analyzing information defined in a SS_descriptor among descriptors corresponding to the selected program, the descriptors being contained in the PMT; extracting a reference video from the MPEG-2 TS channel based on the descriptors corresponding to the selected program; determining whether an additional video corresponding to the reference video is stored in the broadcast receiving apparatus; stereoscopically displaying the reference video and the additional video when the additional video is determined to be stored in the broadcast receiving apparatus; and monoscopically displaying the reference video and storing the reference video in the broadcast receiving apparatus when the additional video is determined not to be stored in the broadcast receiving apparatus.

In this instance, the analyzing of the information may include analyzing a service type, the service type defining a type of a stereoscopic service; analyzing a content name, the content name defining a name of a file from which the additional video is to be extracted and a name of a file in which the reference video is to be stored; analyzing an NRT marker, the NRT marker representing a start position of the stereoscopic service for synchronization between the reference video and the additional video; and analyzing a file size and an expiration date of the file in which the reference video is to be stored.

According to an aspect of the present invention, there is provided a broadcast receiving apparatus to process a method for performing a stereoscopic service. The broadcast receiving apparatus may perform extracting a PMT corresponding to a program selected by a user from a PAT, the PAT being contained in a MPEG-2 TS; analyzing information defined in a SS_descriptor among descriptors corresponding to the selected program, the descriptors being contained in the PMT; extracting a reference video from the MPEG-2 TS based on the descriptors corresponding to the selected program; extracting an additional video from the broadcast receiving apparatus based on the analyzed information, the additional video being stored in advance in the broadcast receiving apparatus; and synchronizing the extracted reference video with the extracted additional video based on the analyzed information at a time when a playback of a stereoscopic video is started, and displaying the synchronized video.

According to another aspect of the present invention, there is provided a broadcast receiving apparatus to process a method for performing a stereoscopic service. The broadcast receiving apparatus may perform extracting a PMT corresponding to a program selected by a user from a PAT, the PAT being contained in a MPEG-2 TS; analyzing information defined in a SS_descriptor among descriptors corresponding to the selected program, the descriptors being contained in the PMT; extracting a reference image from the MPEG-2 TS based on the descriptors corresponding to the selected program; extracting an additional image from the broadcast receiving apparatus based on the analyzed information, the additional image being stored in advance in the broadcast receiving apparatus; and synchronizing the extracted reference image with the extracted additional image and displaying the synchronized video.

According to still another aspect of the present invention, there is provided a broadcast receiving apparatus to process a method for performing a stereoscopic service. The broadcast receiving apparatus may perform extracting a PMT corresponding to a program selected by a user from a PAT, the PAT being contained in a MPEG-2 TS to transmit a content, the content being repeatedly transmitted for a predetermined period of time so that a left image and a right image are alternatingly transmitted as a reference video through the MPEG-2 TS channel; analyzing information defined in a SS_descriptor among descriptors corresponding to the selected program, the descriptors being contained in the PMT; extracting a reference video from the MPEG-2 TS based on the descriptors corresponding to the selected program; determining whether an additional video corresponding to the reference video is stored in the broadcast receiving apparatus; stereoscopically displaying the reference video and the additional video when the additional video is determined to be stored in the broadcast receiving apparatus; and monoscopically displaying the reference video and storing the reference video in the broadcast receiving apparatus when the additional video is determined not to be stored in the broadcast receiving apparatus.

### [EFFECT]

According to an embodiment of the present invention, it is possible to perform a T-DMB non-real-time stereoscopic service.

According to an embodiment of the present invention, it is possible to download and store additional data for a stereoscopic service in advance, and process the stored additional data along with reference data transmitted in real-time, to thereby overcome a limitation in data transmission rate.

According to an embodiment of the present invention, it is possible to perform synchronization between additional data and reference data which is transmitted in non-real-time, to prevent degradation in image quality of stereoscopic data.

### [BRIEF DESCRIPTION OF THE DRAWINGS]

FIG. 1 is a diagram illustrating an example of performing a non-real-time Terrestrial Digital Multimedia Broadcasting (T-DMB) stereoscopic service according to an embodiment of the present invention;
FIG. 2 is a diagram illustrating a method of accessing a content to perform a non-real-time Multimedia Object Transfer (MOT)/stream mode stereoscopic video service according to an embodiment of the present invention;
FIG. 3 is a diagram illustrating a method of accessing a content to perform a non-real-time MOT/stream mode video-associated stereoscopic data service according to an embodiment of the present invention;
FIG. 4 is a diagram illustrating a method of accessing a content to perform a non-real-time repeat content stereoscopic video service according to an embodiment of the present invention;
FIG. 5 is a diagram illustrating a default format and an optional format of a stereoscopic image according to an embodiment of the present invention;
FIG. 6 is a diagram illustrating a method of playing back a stereoscopic video according to an embodiment of the present invention; and
FIG. 7 is a diagram illustrating an example of performing a T-DMB non-real-time repeat content stereoscopic video service according to an embodiment of the present invention.

### [DETAILED DESCRIPTION OF THE INVENTION]

Hereinafter, embodiments of the present invention are described to explain the present invention with reference to the accompanying figures.

Terms used in embodiments of the present invention are defined as follows:

### (1) Stereoscopy

Stereoscopy enables a viewer to perceive a three-dimensional (3D) effect based on data viewed by left and right eyes of human. Stereoscopy is referred to as "3D imaging".

### (2) Monoscopy

Monoscopy enables a viewer to perceive a two-dimensional (2D) effect, not the 3D effect, based on data viewed by a single human eye. "Monoscopy" is referred to as "2D imaging".

### (3) Terrestrial Digital Multimedia Broadcasting (T-DMB) non-real-time stereoscopic service

The T-DMB non-real-time stereoscopic service refers to a service to provide a stereoscopic video service or a video-associated data service in a manner compatible with a conventional T-DMB monoscopic services, and to transmit additional required data in non-real-time to realize a stereoscopic display.

### (4) T-DMB non-real-time stereoscopic video service

The T-DMB non-real-time stereoscopic video service refers to a service to transmit a video in non-real-time to provide a stereoscopic video in a T-DMB service.

### (5) T-DMB non-real-time stereoscopic video-associated data service

In a T-DMB service, the T-DMB non-real-time stereoscopic video-associated data service refers to a service to transmit a still image (namely, an image) in non-real-time to provide the display of a stereoscopic image along with the associated monoscopic video.

### (6) T-DMB non-real-time repeat content stereoscopic video service

The T-DMB non-real-time repeat content stereoscopic video service refers to a service to repeatedly transmit a content, such as an advertisement content, for a predetermined period of time to provide a stereoscopic video in a T-DMB service.

### (7) T-DMB non-real-time Multimedia Object Transfer (MOT)/stream mode stereoscopic (video, data) service

T-DMB non-real-time MOT/stream mode stereoscopic (video, data) service refers to a service to process reference data along with additional data stored in a nonvolatile storage device to display a stereoscopic video or stereoscopic data when a monoscopic video or monoscopic data corresponding to the additional data is received in real-time. Here, this service may cause the additional data used to display the stereoscopic video or stereoscopic data to be transmitted in advance to a T-DMB receiver through a MOT protocol so that the additional data is stored in the nonvolatile storage device of the T-DMB receiver.

### (8) T-DMB non-real-time MOT/stream mode video-associated stereoscopic data service

The T-DMB non-real-time MOT/stream mode video-associated stereoscopic data service refers to a service to provide a stereoscopic data service along with a monoscopic video service in a T-DMB service.

### (9) T-DMB stereoscopic service receiving apparatus

The T-DMB stereoscopic service receiving apparatus refers to an apparatus for receiving a T-DMB signal to provide a user with a stereoscopic service.

### (10) Lenticular lens method

The lenticular lens method refers to a display method to refract a left image and a right image through a lenticular screen so that different images are viewed by each eye of a human. Here, lenticular lenses are vertically arrayed on the lenticular screen to diffuse images so that a viewing angle of about 180° is provided from the center of the lenticular screen.

### (11) Reference image

The reference image refers to an image recognized and played back by a conventional T-DMB receiver in a manner compatible with a stereoscopic image, or refers to an image played back when a viewing mode is switched from a stereoscopic mode to a monoscopic mode. In the case of a moving image, the reference image may be referred to as a "reference moving image" or a "reference video". In the case of a still image, the reference image may be referred to as a "reference still image".

### (12) Additional image

The additional image refers to an image other than a reference image of a stereoscopic image. The additional image may be stereoscopically played back together with the reference image by the T-DMB receiver. A conventional T-DMB receiver may fail to recognize the additional image and disregard the additional image. In the case of a moving image, the additional image may be referred to as an "additional moving image" or an "additional video" may be used. In the case of a still image, the additional image may be referred to as an "additional still image".

Abbreviations of terms used in embodiments of the present invention are listed in Table 1 below.

**[Table 1]**

| | |
|---|---|
| 2D | Two-Dimensional |
| 3D | Three-Dimensional |
| BIFS | Binary Format for Scenes |
| CTS | Composition Time Stamp |
| DMB | Digital Multimedia Broadcasting |
| DMB-AF | Digital Multimedia Broadcasting Application Format |
| ES | Elementary Stream |
| ESD | Elementary Stream Descriptor |
| IOD | Initial Object Descriptor |
| JPEG | Joint Photographic Experts Group |
| MNG | Multiple-image Network Graphics |
| NRT | Non-Real-Time |
| OD | Object Descriptor |
| PES | Packetized Elementary Stream |
| PMT | Program Map Table |
| PNG | Portable Network Graphics |
| PSI | Program Specific Information |
| SS | Stereoscopic Service |
| SL | Sync Layer |
| TS | Transport Stream |

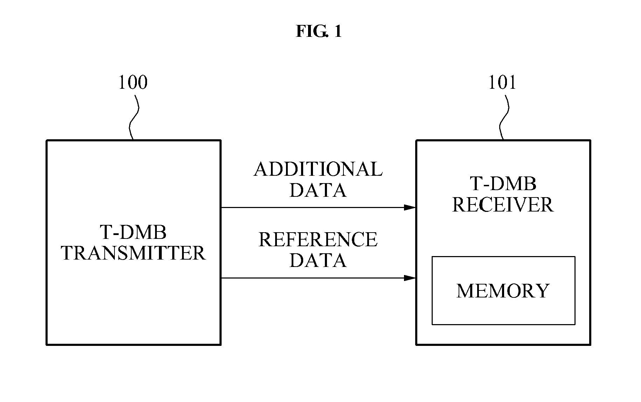

FIG. 1 is a diagram illustrating an example of performing a non-real-time T-DMB stereoscopic service according to an embodiment of the present invention.

Referring to FIG. 1, to provide a T-DMB service, a T-DMB transmitter 100 may transmit data to a T-DMB receiver 101 in real-time. According to an embodiment of the present invention, the T-DMB receiver 101 may provide a user with a stereoscopic service. The stereoscopic service may provide a 3D image using a left image and a right image, and thus a user may actually perceive more real. Since the stereoscopic service needs to transmit both a left eye image and a right eye image, an amount of information to be transmitted may be up to twice that of a monoscopic service.

Accordingly, the T-DMB transmitter 100 may transmit a reference image and an additional image using other methods, rather than multiplexing of the reference image with the additional image, and may store in advance the additional image in a nonvolatile storage device of the T-DMB receiver 101, for example a memory. The T-DMB receiver 101 may process the stored additional image along with the reference image transmitted in real-time from the T-DMB transmitter 100, and may provide a user with the stereoscopic service.

The T-DMB receiver 101 may acquire additional images in real-time from the T-DMB transmitter 100 using the following schemes:
(i) downloading an additional image with a file format in the T-DMB receiver 101 through a MOT protocol;
(ii) downloading an additional image with a file format via a high-speed wired Internet, storing the downloaded additional image in a portable storage device, and moving in advance the additional image from the portable storage device to the T-DMB receiver 101;
(iii) when the T-DMB receiver 101 supports a portable Internet, downloading in advance an additional image with a file format via the portable Internet;
(iv) when a content such as an advertisement is repeatedly transmitted for a predetermined period of time, transmitting, by the T-DMB transmitter 100, a reference image to the T-DMB receiver 101 so that a left image and a right image are alternatingly transmitted, and storing, in the T-DMB receiver 101, the left image and right image alternatingly received from the T-DMB transmitter 100 in a nonvolatile storage device, and processing the stored images together to stereoscopically display the processed images whenever the same content is broadcast.

Specifically, in scheme (iv), when the left image is used as the reference image transmitted in real-time, the right image may be used as the additional image stored in advance in the T-DMB receiver 101. When the right image is used as the reference image transmitted in real-time, the left image may be used as the additional image stored in advance in the T-DMB receiver 101. According to scheme (iv), when the left image or the right image is not stored in advance in the T-DMB receiver 101, the T-DMB receiver 101 may monoscopically display an image received at first from the T-DMB transmitter 100.

According to an embodiment of the present invention, an additional video used to provide a stereoscopic video service may be downloaded in advance in the T-DMB receiver 101 through the MOT protocol, to thereby provide a non-real-time stereoscopic service. Hereinafter, this service is referred to as a "T-DMB non-real-time MOT/stream mode stereoscopic video service".

According to another embodiment of the present invention, an additional image used to provide a stereoscopic BIFS data service may be downloaded in advance in the T-DMB receiver 101 through the MOT protocol, to thereby provide a non-real-time stereoscopic service. Hereinafter, this service is referred to as a "T-DMB non-real-time MOT/stream mode video-associated stereoscopic data service".

According to still another embodiment of the present invention, in the case of a repeat content, a non-real-time stereoscopic service may be provided to provide a stereoscopic video service without further transmitting additional video. Hereinafter, this service is referred to as a "T-DMB non-real-time repeat content stereoscopic video service".

The T-DMB non-real-time stereoscopic service according to an embodiment of the present invention may be spatially or temporally used together with a conventional monoscopic service. Specifically, "temporal use" in a stereoscopic video service means that a monoscopic video service and a stereoscopic video service are alternatingly provided.

Also, "spatial use" in the stereoscopic BIFS data service means that only a part among texts, graphics, and images overlaid on a monoscopic video using a BIFS is displayed as stereoscopic still images. In this instance, "temporal use" means that a cycle, in which a first period where only monoscopic BIFS data is serviced, a second period where the monoscopic BIFS data is serviced together with stereoscopic BIFS data, and the first period are sequentially provided for each broadcasting time, is repeated at least once in a single program.

In a non-real-time stereoscopic video service, synchronization between a reference video and an additional video is required at a frame level. In a non-real-time stereoscopic video service according to an embodiment of the present invention, a playback length of a stereoscopic video may be determined based on characteristics of an additional video file stored in a nonvolatile storage device. For example, when the number of frames of an additional video is less than the number of frames of a reference video, stereoscopic display may be performed until the last frame of the additional video is used. Assuming that the additional video is stored in a compressed format and a first frame of the additional video is not an Instantaneous Decoding Refresh (IDR) picture, when it is not possible to decode the first frame of the additional video, the additional video may be stereoscopically displayed from the first IDR frame.

Requirements for the T-DMB non-real-time stereoscopic service according to an embodiment of the present invention are described as follows:

### < Requirements for T-DMB non-real-time stereoscopic service>

### 1. General requirements

The T-DMB non-real-time stereoscopic service is based on a "standard of transmission and reception for T-DMB".

In the T-DMB non-real-time stereoscopic service, an additional image may be acquired from the nonvolatile storage device mounted in the T-DMB receiver 101, rather than being multiplexed with a reference image and transmitted or received in real-time from or to the T-DMB receiver 101 through the same sub-channel.

A compatibility of the T-DMB non-real-time stereoscopic service with a conventional T-DMB receiver may be guaranteed. In this instance, the conventional T-DMB receiver refers to a T-DMB receiver for providing a monoscopic service, or a T-DMB receiver for additionally supporting a real-time stereoscopic data service based on the "standard of the DMB video-associated stereoscopic data service".

### 2. Service requirements

### (1) Receiving performance

The T-DMB receiver 101 may comply with receiving performance requirements defined in the "standard of transmission and reception for T-DMB video".

### (2) Service

In a stereoscopic video service, the T-DMB receiver 101 may stereoscopically provide a video. In a stereoscopic video-associated data service, the T-DMB receiver 101 may stereoscopically provide a part among graphics, texts, or images, or all of the images. Here, the graphics, texts, or images may be provided through a BIFS data service.

### (3) Format

The T-DMB receiver 101 may support a video format and an auxiliary data format which are defined in the "standard of transmission and reception for T-DMB video". Also, the T-DMB receiver 101 may further support a format optimized for a display method using only data corresponding to 1/2 of an image horizontal resolution. The display method may include, for example, a parallax barrier method or a lenticular lens method.

### (4) Compatibility

When providing a stereoscopic service, a conventional monoscopic T-DMB receiver may monoscopically playback an image without any degradation in image quality. The T-DMB receiver 101 may receive a conventional monoscopic service and provide the received service. Also, the T-DMB non-real-time stereoscopic service according to the embodiment of the present invention needs to ensure full interoperability with the conventional T-DMB receiver.

### 3. Transmitting, multiplexing and signaling of stereoscopic image

The T-DMB receiver 101 may comply with a transmission mechanism and a service transmission scheme and a multiplexing scheme defined in the "standard of transmission and reception for T-DMB video" and the "standard of the DMB video-associated stereoscopic data service." Also, the following rules may be further applied.

### (1) Stereoscopic object type

ObjectTypeIndication of a stereoscopic image may comply with a video type and an auxiliary data type which are defined in the "standard of transmission and reception for T-DMB video" and the "standard of the DMB video-associated stereoscopic data service". For example, ObjectTypeIndications for a reference video and an additional video may be set as visual ISO/IEC 14496-10(0x21) defined in the "standard of transmission and reception for T-DMB video". The ObjectTypeIndications for the reference video and additional video may also comply with the "standard of the DMB video-associated stereoscopic data service".

The same compression encoding scheme may be applied to a reference image and an additional image. The ObjectTypeIndication of the additional image is identical to that of the reference image. However, in accordance with the "standard of the DMB video-associated stereoscopic data service", the ObjectTypeIndication of the additional image may differ from that of the reference image.

### (2) Signaling for stereoscopic service

According to an embodiment of the present invention, to maximize interoperability with the conventional T-DMB receiver, signaling for a non-real-time stereoscopic service may be performed only in a PMT contained in PSI of a MPEG-2 TS level.

A stereoscopic service may be provided alone, or may be temporally used together with a conventional monoscopic service. Accordingly, a stereoscopic service descriptor (SS_descriptor) may be additionally defined in the PMT, and thus a non-real-time stereoscopic service may be signaled.

The SS_descriptor may be contained in a descriptor loop immediately following a program_info_length, and may provide information below. The SS_descriptor may be obtained by compatibly extending an SDS_descriptor defined in the "standard of the DMB video-associated stereoscopic data service". The same descriptor_tag may be used in the SS_descriptor and the SDS_descriptor. The information provided by the SS_descriptor may include the following information regarding:
(i) classification of a monoscopic service period and a stereoscopic service period;
(ii) a type of stereoscopic services;
(iii) a configuration format of stereoscopic data;
(iv) information regarding whether a reference image is a left image or a right image;
(v) information regarding a start position of synchronization between a left image and a right image in a non-real-time MOT/stream mode stereoscopic video service or in a non-real-time repeat content stereoscopic video service;
(vi) a name of an additional video file in a non-real-time MOT/stream mode stereoscopic video service;
(vii) information used to form a name of an additional video file in a non-real-time repeat content stereoscopic video service, the information being used to form a name of a file so that a reference video is stored in the file as an additional video to be used when a content is repeated in the next cycle;
(viii) a period during which a file to be stored is retained in a flash memory;
(ix) recommendations for a minimum flash memory space required when a file is stored in a flash memory; and
(x) names of additional image files in a non-real-time MOT/stream mode video-associated stereoscopic data service.

According to an embodiment of the present invention, syntax of the SS_descriptor is described in Table 2 below.

**[Table 2] SS_descriptor**

| Syntax | Number of bits | Remarks |
|---|---|---|
| SS_descriptor () { | | |
| descriptor_tag | bit (8) | 0x40 |
| descriptor_length | bit (8) | --- |
| StereoMono_serviceFlag | bit (1) | |
| If (StereoMono_serviceFlag) { | | |
| ServiceType | bit (3) | |
| CompositionType | bit (3) | |
| LR_first | bit (1) | |
| } | | |
| else { | | |
| reserved | const bit (7) | reserved=0 |
| } | | |
| If (StereoMono_serviceFlag== 1) { | | |
| If (ServiceType == 000 ∥ ServiceType == 010)) | | |
| { | | |
| reserved | const bit (6) | reserved=0 |
| NRT_Marker | bit (2) | |
| ContentNameLength | bit (8) | |
| for (i=0; i<ContentNameLength; i++) { | | |
| ContentName_byte | bit (8) | |
| } | | |
| if (ServiceType==010) { | | |
| ExpireDate | bit (8) | |
| FileSize | bit (8) | |
| } | | |
| } | | |
| else if (ServiceType == 001) { | | |
| SS_image_count | bit (8) | |
| for (i=0; i<N; i++) { | | |
| reserved | const bit (3) | reserved=0 |
| SS_image_PID | bit (13) | |
| ImageNameLength | bit (8) | |
| for (i=0; i<ImageNameLength; i++) { | | |
| ImageName_byte | bit (8) | |
| } | | |
| } | | |
| } | | |
| } | | |
| } | | |

When a value of StereoMono_serviceFlag is set to be "1", a stereoscopic service is provided. When the value of the StereoMono_serviceFlag is set to be "0", a conventional monoscopic T-DMB service is provided. The T-DMB receiver 101 for the stereoscopic service may turn on or off a stereoscopic display automatically depending on a value of the StereoMono_serviceFlag.

A ServiceType indicates a type of stereoscopic service as shown in Table 3 below. However, a value of "111" for the ServiceType is defined as a value reserved for future syntax extension.

**[Table 3] Value for ServiceType**

| Value | Description |
|---|---|
| 000 | T-DMB non-real-time MOT/stream mode stereoscopic video service |
| 001 | T-DMB non-real-time MOT/stream mode video-associated stereoscopic data service |
| 010 | T-DMB non-real-time repeat content stereoscopic video service |
| 011 | Reserved (for future stereoscopic service) |
| 100 | Value unavailable in the present standard (this value may be set in a real-time T-DMB video-associated stereoscopic data service in accordance with the "standard of the DMB video-associated stereoscopic data service".) |
| 101-110 | Reserved (for future stereoscopic service) |
| 111 | Reserved (for future syntax extension) |

A CompositionType indicates a composition type of received stereoscopic data as shown in Table 4 below. When the value of the ServiceType is set to be "010", a value of the CompositionType may be set to be "001".

**[Table 4] Value for CompositionType**

| Value | Description |
|---|---|
| 000 | Reserved |
| 001 | Default format (left and right images have the same resolution) |
| 010 | Optional format (a resolution of an additional image is set to 1/2 of a horizontal resolution of a reference image) |
| 011 | Value unavailable in the present standard (this value may be set in a side-by-side format in accordance with the "standard of the DMB video-associated stereoscopic data service".) |
| 100∼111 | Reserved |

When a value of an LR_first is set to be "1", a reference image may be defined as a left image. When the value of the LR_first is set to be "0", the reference image may be defined as a right image. Here, the reference image refers to image data transmitted in real-time within a multiplexed stream to provide a T-DMB service.

An NRT_marker represents a start position of a stereoscopic service for synchronization between a left image and a right image, as shown in Table 5 below.

**[Table 5] Value for NRT_Marker**

| Value | Description |
|---|---|
| 00 | Reserved |
| 01 | Among video TS packets following the current PMT, a TS packet where a payload_unit_start_indicator has a value of "1" means a packet where the last AU of a non-real-time stereoscopic video stream is started. |
| 10 | This value is set to NRT_Markers of a PMT transmitted between a PMT with an NRT_Marker of "01" and a PMT with an NRT_Marker of "11". |
| 11 | Among video TS packets following the current PMT, a TS packet where a payload_unit_start_indicator has a value of "1" means a packet where the first AU of a non-real-time stereoscopic video stream is started. |

A ContentNameLength indicates a length of ContentName in bytes.

A ContentName indicates information used to form a name of a required video file based on the following rules:
- In a T-DMB non-real-time MOT/stream mode stereoscopic video service, the ContentName may be set as a name of a file which contains an additional video ES and is stored in a flash memory of the T-DMB receiver 101.
- In a T-DMB non-real-time repeat content stereoscopic video service, the ContentName may be used to designate the file containing the additional video ES. Also, the ContentName may be used to store a reference video ES as a file in the flash memory of the T-DMB receiver 101. For example, when the additional video ES is read from the flash memory of the T-DMB receiver 101, if an additional video is determined as a left image or a right image, a result of synthesizing a ContentNameString with a prefix of "L_" or "R_" may be set as a file name to be read, respectively. Also, when the reference video ES is stored in the flash memory of the T-DMB receiver 101, if a reference video is determined as a left image or a right image, a result of synthesizing a Uniform Resource Locator (URL) with a prefix of "L_" or "R_" may be set as a file name to be stored, respectively.

To distinguish files stored in the same flash memory space from each other, a ContentNameString may be set as a unique name such as "CRID".

An ExpireDate indicates a duration of an ES to be stored as a file in the flash memory in the T-DMB non-real-time repeat content stereoscopic video service. Here, the duration may be recommended by the T-DMB transmitter 100. An actual value of the ExpireDate indicates the last date of the duration. For example, the ExpireDate may be set every two days, and may be represented by the number of days accumulated from January 1. When a value of the ExpireDate is less than the number of days accumulated until the current day, the ExpireDate may represent the number of days accumulated from January 1 of the next year. The ExpireDate with a value of "0" may indicate that it is impossible to know the duration.

A FileSize indicates a minimum memory capacity required for an ES to be stored as a file in the flash memory of the T-DMB receiver 101, in the T-DMB non-real-time repeat content stereoscopic video service. The FileSize may also be recommended by the T-DMB transmitter 100. For example, the FileSize may be measured per megabyte (MByte), and may be changed depending on characteristics of an apparatus. The FileSize with a value of "0" indicates that there is no information about the required capacity. The FileSize may be set up to 255 MByte.

An SS_image_count indicates the number of reference images in the T-DMB non-real-time MOT/stream mode video-associated stereoscopic data service.

An SS_image_PID indicates a PID of a TS packet carrying a reference image in the T-DMB non-real-time MOT/stream mode video-associated stereoscopic data service.

An ImageNameLength indicates a length of an ImageName in bytes.

An ImageName indicates a name of an additional image file stored in the flash memory in the T-DMB non-real-time MOT/stream mode video-associated stereoscopic data service.

### (3) Structure of MPEG-4 OD for non-real-time stereoscopic service

An MPEG-4 OD for describing the non-real-time stereoscopic service defined in the present invention may have the same structure as a conventional 2D video and/or 2D BIFS services. Specifically, the structure of the MPEG-4 OD may be set as if the conventional 2D video and/or 2D BIFS services are provided using only reference videos and/or reference images.

### (4) File name for additional image

The T-DMB receiver 101 may determine a name of a file required for the non-real-time stereoscopic service, as follows:
(i) in a T-DMB non-real-time MOT/stream mode stereoscopic video service, a ContentName of the SS_descriptor may be determined as a name of a file containing an additional video ES to be read from the flash memory of the T-DMB receiver 101;
(ii) in a T-DMB non-real-time MOT/stream mode video-associated stereoscopic data service, a PID of a TS packet carrying each reference image to be used in a 3D BIFS service may be paired with an additional image file name corresponding to the PID, and may be displayed in the SS_descriptor, to notify of a name of an additional video file to be read from the flash memory of the T-DMB receiver 101; and
(iii) in a T-DMB non-real-time repeat content stereoscopic video service, a ContentName of the SS_descriptor may form a part of a required file name.

### (5) File format for additional image

A file format for an additional video may be, for example, a DMB Application Format (DMB-AF; ISO/IEC 23000-9). A file format for an additional image may include, for example, Joint Photographic Experts Group (JPEG), Portable Network Graphics (PNG), and Multiple-image Network Graphics (MNG). JPEG, PNG and MNG may also be used as a file format for a reference image.

The DMB-AF may include an MPEG-2 TS, and may store each ES as a separate stream for each media. A DMB-AF file used in the present invention may contain only an ES of an additional video, not other ESs of media, for example, an audio ES or other video ES.

### (6) Transfer of information regarding storage period and file size for additional video file

The T-DMB transmitter 100 needs to notify the T-DMB receiver 101 of information regarding a storage period and a file size with respect to an additional video file. The storage period means a period during which the T-DMB receiver 101 should retain the additional video file in its flash memory. The file size means a capacity of the flash memory ensured by the T-DMB receiver 101 when downloading the additional video file from the T-DMB transmitter 100 and storing the downloaded file in the flash memory. The information regarding the storage period and file size may be helpfully used when the T-DMB receiver 101 manages the flash memory.

For example, in a T-DMB non-real-time MOT/stream mode stereoscopic service, the storage period and file size may be set based on a BodySize of each MOT header core and based on an Expiration parameter among MOT header extension parameters.

In a T-DMB non-real-time repeat content stereoscopic video service, the storage period and file size may be transferred by the ExpireDate and the FileSize in the SS_descriptor, respectively. The ExpireDate and FileSize in the SS_descriptor may be actually used when the reference video ES transmitted in real-time to the T-DMB receiver 101 is stored in the flash memory of the T-DMB receiver 101, however, may not be used when the additional video ES is read from the flash memory of the T-DMB receiver 101.

### (7) Synchronizing of left image and right image in non-real-time stereoscopic video service.

In a stereoscopic service, synchronizing of a left image and a right image means that the left image and the corresponding right image are simultaneously input to a stereoscopic display. In a non-real-time stereoscopic video service, a reference video is transmitted in real-time, whereas an additional video is read from the flash memory of the T-DMB receiver 101. Thus, there is a need for a mechanism for synchronizing a left image with a right image.

### A. Signaling of first frame position of stereoscopic video

A first frame position of a stereoscopic video may be signaled based on the value of the NRT_marker in the SS_descriptor. The NRT_marker refers to reference information required to form a pair of a first frame of a left image with a first frame of a right image. Accordingly, when a power is applied to the T-DMB receiver 101 at a position subsequent to a position where signaling information is transmitted, or when channels are switched in the T-DMB receiver 101, it is inevitable for the T-DMB receiver 101 to monoscopically display a stereoscopic content. This is because it is difficult to know which portion of the additional video file is to be read and matched with a pair of left and right images, even when receiving a stream corresponding to a reference video of the stereoscopic content. Thus, synchronization of the left and right images need to be started from the first frame position.

### B. Synchronizing of left image and right image at positions other than first frame

A Composition Time Stamp (CTS) value of a first Access Unit (AU) of a reference video may be stored as an offset value for a CTS value of an additional video by the T-DMB receiver 101. The T-DMB receiver 101 may read an AU or a Processing Unit (PU) of the additional video along with the CTS value of the additional video. The CTS value of the additional video may be set to be "0" for the first AU, and thus the stored CTS of the first AU may be added so that a CTS of the AU of the additional video may be set. Since the AU of the reference video and the AU of the additional video needs to be displayed at the same point in time, the two CTS values for the reference video and additional video may be used to search for a pair of left and right images. The pair of left and right images may ideally have the same CTS value, however the two CTS values may slightly differ from each other for various reasons. Thus, the T-DMB receiver 101 may determine a pair of left and right images, when a difference between the two CTS values is less than a predetermined value.

### 4. MOT carousel for MOT/stream mode non-real-time stereoscopic service

### (1) Summary

Prior to broadcasting of a reference image in real-time, additional image files for a non-real-time stereoscopic service may be repeatedly transmitted through a packet mode sub-channel as a MOT carousel in a MOT directory mode. The sub-channel through which the additional image files are transmitted is referred to as an "additional image file channel".

A packet mode service acting to transmit the additional image files may be designated as a secondary service component for a T-DMB video service where a reference image is to be transmitted in real-time on the same ensemble.

An application used to transmit the additional image files may be signaled by FIG 0/13. A User Application Type for the application to transmit the additional image files may be defined in the European Telecommunications Standards Institute (ETSI) TS 101 756. The additional image files may be transmitted to MOT objects within the additional image file channel, respectively, and the MOT directory object may transfer a list of the MOT objects. MOT parameters to be individually applied to the MOT objects may be transmitted and stored as MOT header information that is an individual item in a MOT directory. The MOT header information may comprise a MOT header core and a MOT header extension.

### (2) MOT header core

A MOT header core for each individual object used in the present invention is defined in the ETSI EN 301 234, and the following restrictions may be applied.

With regard to a ContentType, when an additional image file is a video, the content type of the additional image file may be set to be "video(000100)", as described in the ETSI TS 101 756. When an additional image file is an image, the content type of the additional image file may be set to be "image(000010)".

With regard to CotentSubType, the T-DMB receiver 101 may disregard a value of a ContentSubType.

### (3) MOT header extension parameter

MOT header extension parameters used in the present invention are shown in Table 6 below.

**[Table 6] Configuration of each MOT parameter for individual objects**

| Parameter | Parameter ID | Prescribed standards | Obligatory support of UA provider | Obligatory support of T-DMB receiver 101 | Possible occurrences |
|---|---|---|---|---|---|
| PermitOutdatedVersions | 0x01 | MOT | No | No | Once |
| RetransmissionDistance | 0x07 | MOT | No | No | Once |
| Expiration | 0x09 | MOT, Present standard | No | Yes | Once |
| Priority | 0x0A | MOT | No | No | Once |
| ContentName | 0x0C | MOT, Present standard | Yes | Yes | Once |
| UniqueBodyVersion | 0x0D | MOT | No | No | Once |
| MimeType | 0x10 | MOT | No | No | Once |
| CompressionType | 0x11 | MOT | No | No | Once |
| ProfileSubset | 0x21 | MOT | No | No | Once |
| CAInfo | 0x23 | MOT | Yes (when using CA) | Yes (There is a need to examine whether the number of scrambled objects is minimized) | Once |
| CAReplacementObject | 0x24 | MOT | No | No | Once |

An Expiration parameter indicates a period during which the T-DMB receiver 101 retains a file in its flash memory. When the Expiration parameter is not provided by the T-DMB transmitter 100, the T-DMB receiver 101 may set the duration of the file according to its own flash memory management policy.

A ContentName parameter indicates a name of an additional image file, and may be used when the T-DMB receiver 101 forms a pair of left and right images.

### (4) MOT directory extension parameter

According to an embodiment of the present invention, MOT parameters for the entire carousel are shown in Table 7 below. In Table 7, only a DefaultExpiration parameter may be used.

**[Table 7] MOT parameters for the entire carousel**

| Parameter | Parameter ID | Prescribed standards | Obligatory support of UA provider | Obligatory support of T-DMB receiver 101 | Possible occurre nces |
|---|---|---|---|---|---|
| SortedHeaderInformation | 0x00 | MOT | No | No | Once |
| DefaultPermitOutdated Versions | 0x01 | MOT | No | No | Once |
| DefaultExpiration | 0x09 | MOT | No | Yes | Once |

Hereinafter, description will be made of a method by which the T-DMB receiver 101 performs a non-real-time MOT/stream mode stereoscopic video service, a non-real-time MOT/stream mode video-associated stereoscopic data service, and a non-real-time repeat content stereoscopic video service, will be described.

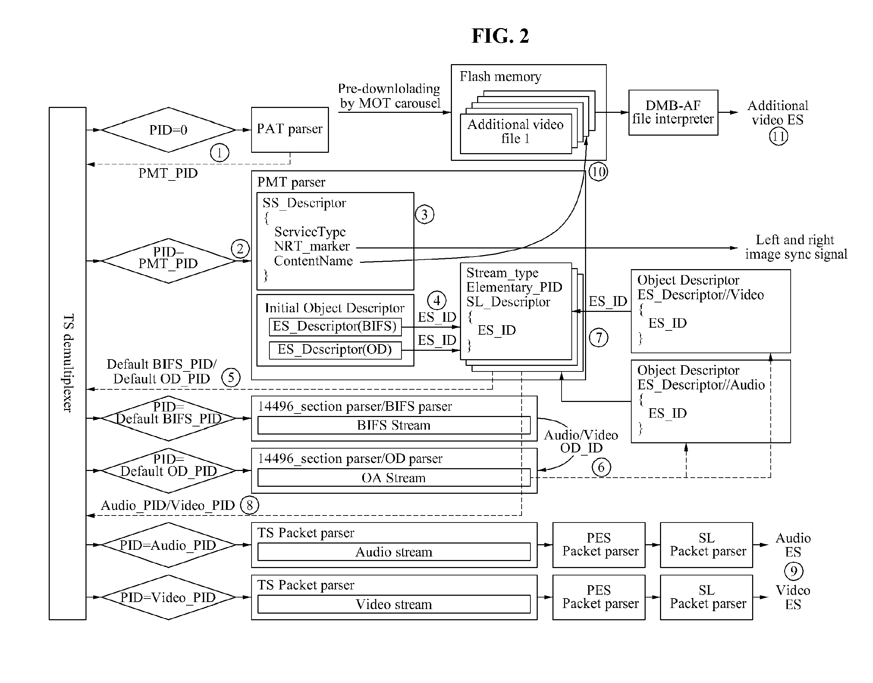

FIG. 2 is a diagram illustrating a method for accessing a content to perform a non-real-time MOT/stream mode stereoscopic video service according to an embodiment of the present invention.

In this instance, a reference video may be transmitted in real-time to the T-DMB receiver 101 in a stream mode through an MPEG-2 TS. Prior to transmission of the reference video, an additional video may be repeatedly transmitted to the T-DMB receiver 101 for a predetermined period of time by a MOT carousel according to a MOT protocol, and may be stored in a nonvolatile memory of the T-DMB receiver 101.

In operation 10, the T-DMB receiver 101 may analyze a PAT, of which a PID is '0x0000' and which is contained in the MPEG-2 TS.

In operation ②, the T-DMB receiver 101 may extract a PMT corresponding to a program selected by a user from the PAT, and may then read a PID of the extracted PMT.

In operation ③, the T-DMB receiver 101 may read descriptors corresponding to the selected program. When an SS_descriptor exists among the read descriptors, the T-DMB receiver 101 may analyze information defined in the SS_descriptor. In this instance, the T-DMB receiver 101 may recognize that a ServiceType of the SS_descriptor indicates the non-real-time MOT/stream mode stereoscopic video service. Also, the T-DMB receiver 101 may assign a ContentName of the SS_descriptor as a file name to read an additional video ES. The T-DMB receiver 101 may read an NRT_marker from the SS_descriptor, and may synchronize a first frame of a left image with a first frame of a right image. Here, the NRT_marker may represent a start position of a stereoscopic service for synchronization between the reference video and the additional video. The left image and the right image mean the reference video and the additional video, respectively.

In operation ④, the T-DMB receiver 101 may analyze an IOD_descriptor among the descriptors corresponding to the selected program, and may respectively analyze ESDs which are associated with a BIFS stream and an OD stream. Also, the T-DMB receiver 101 may identify elementary stream identifiers (ES_IDs) based on each of the analyzed ESDs, and may then search for an SL_descriptor having the same value as the ES_IDs from a Descriptor Loop.

In operation ⑤, the T-DMB receiver 101 may analyze a PID and a StreamType described prior to the SL_descriptor found as a result of searching in operation ④, and may search for TS packets from the MPEG-2 TS. Here, each of the TS packets may include the BIFS stream and the OD stream.

In operation ⑥, the T-DMB receiver 101 may read an audio OD and a video OD from the OD stream using OD IDs for an audio object and a video object which are contained in the BIFS stream.

In operation ⑦, the T-DMB receiver 101 may analyze an ESD corresponding to each media stream in the OD. Here, each media stream may be an audio stream or a video stream. The T-DMB receiver 101 may identify an audio ES_ID and a video ES_ID. The video ES_ID may be defined as a reference video ES_ID.

In operation ⑧, the T-DMB receiver 101 may identify PIDs corresponding to the ES_IDs identified in operation ⑦, and may then search for TS packets from the MPEG-2 TS. Here, each of the TS packets may include an audio stream and a video stream.

In operation ⑨, the T-DMB receiver 101 may extract an audio ES and a reference video ES from the TS packets using TS packet parsers, PES packet parsers and SL packet parsers, and may transfer the extracted audio ES and reference video ES to an audio decoder and a video decoder, respectively.

In operation ⑩, the T-DMB receiver 101 may read a file in which the additional video ES is to be stored from the flash memory based on the ContentName assigned as the file name in operation ③.

In operation ⑪, the T-DMB receiver 101 may extract the additional video ES from the file read in operation ⑩, and may transfer the extracted additional video ES to the video decoder. The T-DMB receiver 101 may synchronize the left image with the right image at a point in time when a playback of a stereoscopic video is started, based on the start position represented by the NRT_marker in operation ③, to thereby display a stereoscopic video.

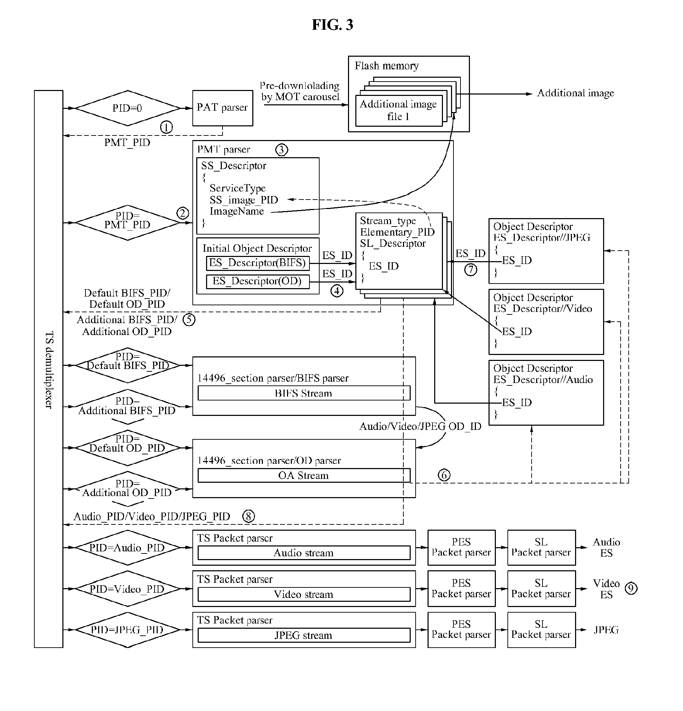

FIG. 3 is a diagram illustrating a method for accessing a content to perform a non-real-time MOT/stream mode video-associated stereoscopic data service according to an embodiment of the present invention.

In this instance, a reference image may be transmitted in real-time to the T-DMB receiver 101 in a stream mode through an MPEG-2 TS. Prior to transmission of the reference image, an additional image may be repeatedly transmitted to the T-DMB receiver 101 for a predetermined period of time by a MOT carousel according to a MOT protocol, and may be stored in a nonvolatile memory of the T-DMB receiver 101.

In operation ①, the T-DMB receiver 101 may analyze a PAT, of which a PID is '0x0000' and which is contained in the MPEG-2 TS.

In operation ②, the T-DMB receiver 101 may read a PID of a PMT corresponding to a program selected by a user from the PAT.

In operation ③, the T-DMB receiver 101 may read descriptors corresponding to the selected program. When an SS_descriptor exists among the read descriptors, the T-DMB receiver 101 may analyze information defined in the SS_descriptor. In this instance, the T-DMB receiver 101 may recognize that a ServiceType of the SS_descriptor indicates the non-real-time MOT/stream mode video-associated stereoscopic data service.

In operation ④, the T-DMB receiver 101 may analyze an IOD_descriptor among the descriptors corresponding to the selected program, and may respectively analyze ESDs which are associated with a BIFS stream and an OD stream. In this instance, since a video-associated data service is provided, the T-DMB receiver 101 may analyze ESDs corresponding to four streams, namely a default BIFS stream, a default OD stream, an additional BIFS stream and an additional OD stream. Also, the T-DMB receiver 101 may identify elementary stream identifiers (ES_IDs) based on each of the analyzed ESDs, and may then search for an SL_descriptor having the same value as the ES_IDs from a Descriptor Loop.

In operation ⑤, the T-DMB receiver 101 may analyze a PID and a StreamType described prior to the SL_descriptor found as a result of searching in operation ④, and may search for TS packets from the MPEG-2 TS. Here, each of the TS packets may include a default BIFS stream, a default OD stream, an additional BIFS stream and an additional OD stream.

In operation ⑥, the T-DMB receiver 101 may read an audio OD and a video OD from the default OD stream using OD IDs for an audio object and a video object which are contained in the default BIFS stream. Also, the T-DMB receiver 101 may read a JPEG OD from the additional OD stream using an OD_ID for a JPEG image object contained in the additional BIFS stream.

In operation ⑦, the T-DMB receiver 101 may analyze an ESD corresponding to each media stream in the OD. Here, each media stream may be an audio stream or a video stream. The T-DMB receiver 101 may identify an audio ES_ID, a video ES_ID and a JPEG image ES_ID. The JPEG image ES_ID may be defined as a reference image ES_ID.

In operation ⑧, the T-DMB receiver 101 may identify PIDs corresponding to the ES_IDs identified in operation ⑦, and may then search for TS packets from the MPEG-2 TS. Here, each of the TS packets may include an audio stream, a video stream and a JPEG image. In this instance, when values of the identified PIDs are identical to a value of one of SS_image_PIDs in the SS_descriptor, the T-DMB receiver 101 may store an ImageName described subsequent to the SS_image_PID as a file name to read the additional image.

In operation ⑨, the T-DMB receiver 101 may extract an audio ES, a video ES and a JPEG file from the TS packets using TS packet parsers, PES packet parsers and SL packet parsers, and may transfer the extracted audio ES, video ES and JPEG file to an audio decoder, a video decoder and a JPEG decoder, respectively.

Operations ⑨ and ⑩ may be performed at the same time. In operation ⑩, the T-DMB receiver 101 may read an additional image JPEG file from the flash memory based on the ImageName stored as the file name in operation ⑦, and may transfer the read file to the JPEG decoder.

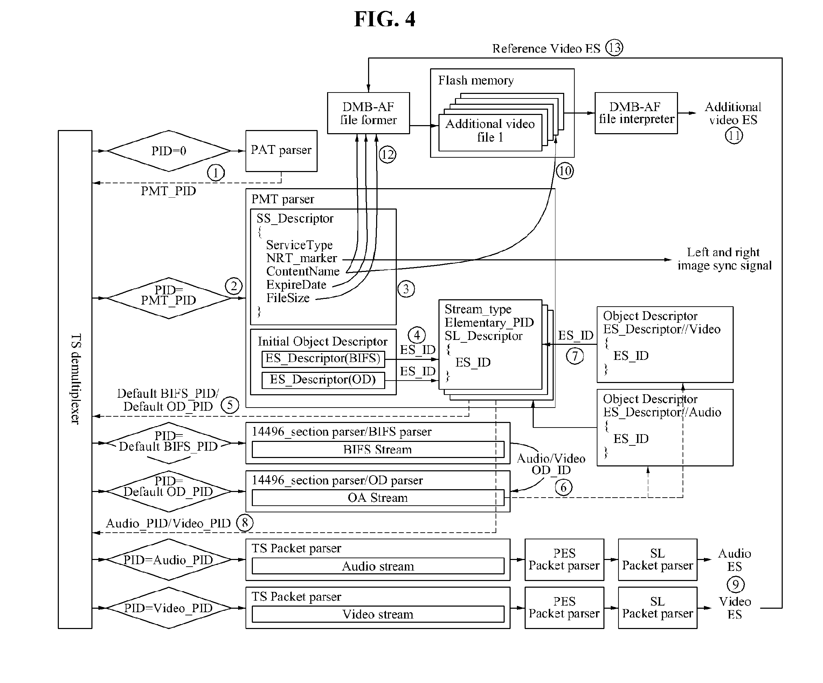

FIG. 4 is a diagram illustrating a method for accessing a content to perform a non-real-time repeat content stereoscopic video service according to an embodiment of the present invention.

In this instance, a reference video may be a content transmitted repeatedly for a predetermined period of time, and an additional video may be a content stored in the T-DMB receiver 101.

In operation ①, the T-DMB receiver 101 may analyze a PAT, of which a PID is '0x0000' and which is contained in the MPEG-2 TS.

In operation ②, the T-DMB receiver 101 may read a PID of a PMT corresponding to a program selected by a user from the PAT.

In operation ③, the T-DMB receiver 101 may read descriptors corresponding to the selected program. When an SS_descriptor exists among the read descriptors, the T-DMB receiver 101 may analyze information defined in the SS_descriptor. In this instance, the T-DMB receiver 101 may recognize that a ServiceType of the SS_descriptor indicates the non-real-time repeat content stereoscopic video service. Also, the T-DMB receiver 101 may form a "file name to read the additional video" and a "file name to store the reference video" based on a ContentName of the SS_descriptor, and may store the formed file names so that the file names may be used later. The T-DMB receiver 101 may read an ExpireDate and a FileSize from the SS_descriptor, and may store the read ExpireDate and FileSize. The T-DMB receiver 101 may also read an NRT_marker from the SS_descriptor, and may synchronize a first frame of a left image with a first frame of a right image. Here, the left image and the right image may correspond to the reference video and the additional video, respectively.

In operation ④, the T-DMB receiver 101 may analyze an IOD_descriptor among the descriptors corresponding to the selected program, and may respectively analyze ESDs which are associated with a BIFS stream and an OD stream. Also, the T-DMB receiver 101 may identify elementary stream identifiers (ES_IDs) based on each of the analyzed ESDs, and may then search for an SL_descriptor having the same value as the ES_IDs from a Descriptor Loop.

In operation ⑤, the T-DMB receiver 101 may analyze a PID and a StreamType described prior to the SL_descriptor found as a result of searching in operation ④, and may search for TS packets from the MPEG-2 TS. Here, each of the TS packets may include the BIFS stream and the OD stream.

In operation ⑥, the T-DMB receiver 101 may read an audio OD and a video OD from the OD stream using OD IDs for an audio object and a video object which are contained in the BIFS stream.

In operation ⑦, the T-DMB receiver 101 may analyze an ESD corresponding to each media stream in the OD. Here, each media stream may be an audio stream or a video stream. The T-DMB receiver 101 may identify an audio ES_ID and a video ES_ID. The video ES_ID may be defined as a reference video ES_ID.

In operation ⑧, the T-DMB receiver 101 may identify PIDs corresponding to the ES_IDs identified in operation ⑦, and may then search for TS packets from the MPEG-2 TS. Here, each of the TS packets may include an audio stream and a video stream.

In operation ⑨, the T-DMB receiver 101 may extract an audio ES and a reference video ES from the TS packets using TS packet parsers, PES packet parsers and SL packet parsers in sequence, and may transfer the extracted audio ES and reference video ES to an audio decoder and a video decoder, respectively.

In operation ⑩, when the flash memory contains the "file name to read the additional video" stored in operation ③, the T-DMB receiver 101 may read from the flash memory a file in which an additional video ES is to be stored. Alternatively, when no the flash memory contains the "file name to read the additional video", the T-DMB receiver 101 may monoscopically display the reference video.

In operation ⑪, the T-DMB receiver 101 may extract the additional video ES from the file read in operation ⑩, and may transfer the extracted additional video ES to the video decoder. The T-DMB receiver 101 may synchronize the left image with the right image at a point in time when a playback of a stereoscopic video is started, based on the start position represented by the NRT_marker in operation ③, to thereby stereoscopically display the synchronized video.

Operation ⑫ may be performed while operation ⑪ is being performed. In operation ⑫, the T-DMB receiver 101 may check resources for file storage in advance based on the FileSize stored in operation ③. Also, the T-DMB receiver 101 may store a file in the flash memory and may manage the duration of the stored file based on the ExpireDate stored in operation ③. However, a file storage operation will be omitted when the flash memory already contains a file with the same file name.

In operation ⑬, the T-DMB receiver 101 may determine whether the flash memory contains a file with the "file name to store the reference video" which is stored in operation ③. When determining that the "file name to store the reference video" does not exist, the T-DMB receiver 101 may store the reference video ES extracted in operation ⑨ in the flash memory at a point in time when a playback of a stereoscopic video is started. In this instance, the reference video ES may have the "file name to store the reference video".

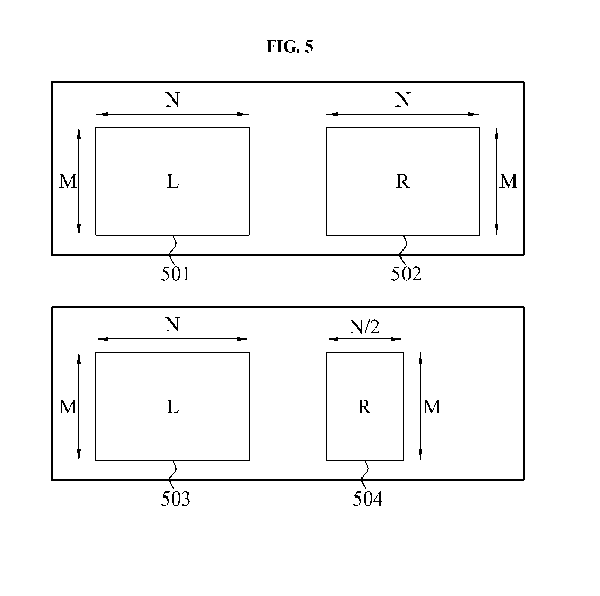

FIG. 5 is a diagram illustrating a default format and an optional format for a stereoscopic image according to an embodiment of the present invention.

A stereoscopic image may be formed in one of two formats, namely a default format and an optional format. The two formats may be used as a format of an image input to an encoder of the T-DMB transmitter 100, and as a format of an image output from a decoder of the T-DMB receiver 101.

The default format and the optional format may be compatible with a conventional T-DMB monoscopic video service and a conventional video-associated monoscopic data service. Specifically, a conventional T-DMB receiver may receive in real-time only reference image data required for monoscopic display among data usable in the two formats, and may playback the received data. The reference image may have the same form regardless of the type of formats, however, the additional image may have different forms depending on whether the default format or the optional format is selected and may be provided to the T-DMB receiver 101. Specifically, a horizontal resolution of the additional image with the optional format may be about half a horizontal resolution of the reference image.

The T-DMB receiver 101 according to the embodiment of the present invention may be an apparatus for providing a T-DMB stereoscopic service, and may support both the default format and the optional format of the stereoscopic image. In FIG. 5, a stereoscopic image with the default format may include a left image 501 and a right image 502. The left image 501 and the right image 502 may have the same size and may be viewed by left and right eyes, respectively. One of the left image 501 and the right image 502 may be defined as a reference image, and the other may be defined as an additional image. Also, a stereoscopic image with the optional format may include a left image 503 and a right image 504. The right image 504 may be obtained by horizontally subsampling the left image 503 so that a resolution of the right image 504 may be about half a resolution of the left image 503. The left image 503 and the right image 504 may be changed in shape.

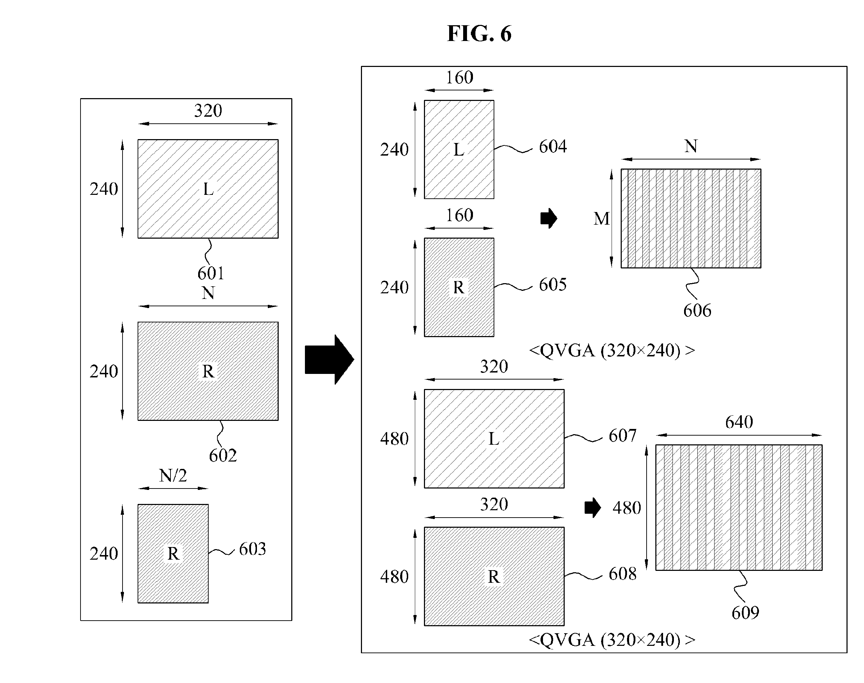

FIG. 6 is a diagram illustrating a method for playing back a stereoscopic video according to an embodiment of the present invention.

The T-DMB receiver 101 according to the embodiment of the present invention may support a non-glasses type 3D display method. The non-glasses type 3D display method may include a parallax barrier method or a lenticular lens method.

Referring to FIG. 6, a stereoscopic display of the T-DMB receiver 101 may have a QVGA resolution of 320×240 pixels and a VGA resolution of 640×480 pixels. In FIG. 6, a left image 601 and a right image 602 are formed in a default format, and a right image 603 is formed in an optional format.

As shown in FIG. 6, to realize a stereoscopic display in the QVGA resolution of 320×240 pixels, a left image 604 and a right image 605 may be converted into a stereoscopic image in a vertical line interlace format, and the stereoscopic image may be displayed. In this instance, the left image 604 may be defined as a reference image. A stereoscopic display in the VGA resolution of 640×480 pixels may be realized in the same manner as the QVGA resolution of 320×240 pixels.

Specifically, in the case of displaying a stereoscopic image at the QVGA-level resolution, when a format of the reference image 601 is set to be a default format, the reference image 601 may be changed to the reference image 604, of which a horizontal resolution is reduced to half that of the reference image 601 through 1/2 subsampling, so that the default format may be converted into a vertical line interlace format 606. Also, when a format of the additional image 602 is set to be a default format, for example, 320×240 pixels, the additional image 602 may be changed to the additional image 605, of which a horizontal resolution is reduced to half that of the additional image 602 through 1/2 subsampling, so that the default format may be converted into the vertical line interlace format 606. When a format of the additional image 603 is set to be an optional format, for example 160 × 240 pixels, the format may be converted into the vertical line interlace format 606 without any reduction in horizontally resolution.

Alternatively, in the case of displaying a stereoscopic image at the QVGA-level resolution, when formats of a reference image 607 and an additional image 608 are set to be a default format, both of the reference image 601 and the additional image 608 may be vertically upsampled to twice the resolution, so that the default format may be converted into a vertical line interlace format 609. When the format of the additional image 603 is set to be an optional format, the additional image 603 may be horizontally and vertically upsampled to twice the resolution, so that the format may be converted into the vertical line interlace format 609.

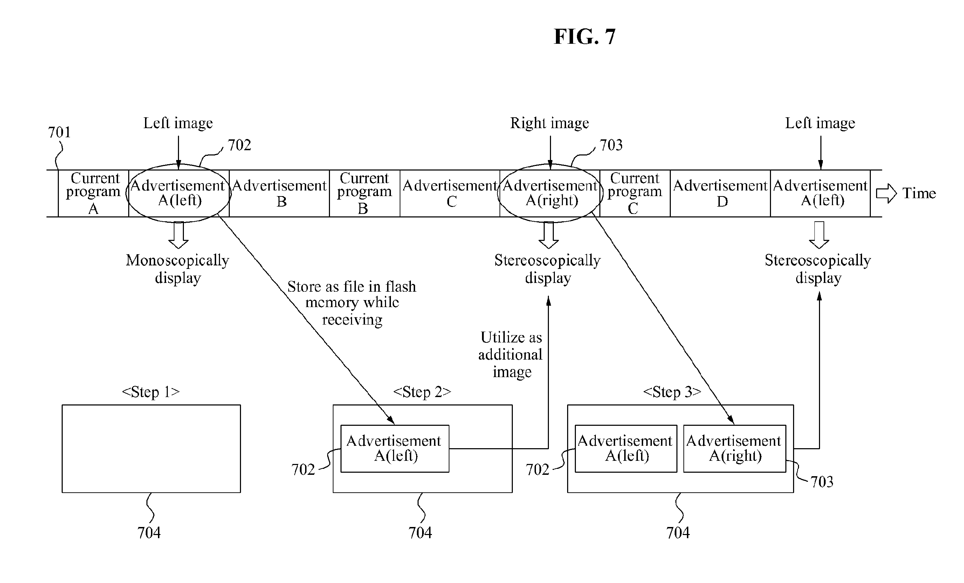

FIG. 7 is a diagram illustrating an example of performing a T-DMB non-real-time repeat content stereoscopic video service according to an embodiment of the present invention.

FIG. 7 relates to a service for a content, for example an advertisement, which is transmitted repeatedly for a predetermined period of time, for example a month, three months or six months. The T-DMB transmitter 100 may transmit a left image 702 and a right image 703 through a specific frame 701 in an alternating manner. Here, the left image 702 or the right image 703 may be used as a reference video. For example, as shown in FIG. 7, when an advertisement is broadcast for a first time, the left image 702 may be transmitted as a reference video. When the advertisement is broadcast for a second time, the right image 703 may be transmitted as a reference video. When the advertisement is broadcast for a third time, the left image 702 may be transmitted as a reference video again.

When receiving the reference video, the T-DMB receiver 101 may determine whether an additional video corresponding to the reference video is stored in a flash memory 704. When determining that the flash memory 704 contains the additional video, the T-DMB receiver 101 may pair the left image 702 with the right image 703 based on the reference video and the additional video, to display a stereoscopic video. Alternatively, when determining that additional video in the flash memory 704 does not exist, the T-DMB receiver 101 may monoscopically display the reference video only. While determining the presence or absence of the additional video, the T-DMB receiver 101 may also determine whether the flash memory 704 contains the reference video. When determining that reference video in the flash memory 704 does not exist, the T-DMB receiver 101 may store the reference video in the flash memory 704 to utilize the reference video whenever the content is repeated.

The methods according to the above-described embodiments of the present invention may be recorded in computer-readable storage media that includes program instructions to implement various operations embodied by a computer. The media may also include, alone or in combination with the program instructions, data files, data structures, and the like. The program instructions recorded on the media may be those specially designed and constructed for the purposes of the present invention, or they may be of the kind well-known and available to those having skill in the computer software arts.

Although a few exemplary embodiments of the present invention have been shown and described, the present invention is not limited to the described exemplary embodiments. Instead, it would be appreciated by those skilled in the art that changes may be made to these exemplary embodiments without departing from the principles and spirit of the invention, the scope of which is defined by the claims and their equivalents.

### [DESCRIPTION OF REFERENCE NUMERALS]

- 100:: T-DMB transmitter

- 101:: T-DMB receiver

## Claims

1. A method of performing a stereoscopic service in a broadcast receiving apparatus, the method comprising:
extracting a Program Map Table (PMT) corresponding to a program selected by a user from a Program Association Table (PAT), the PAT being contained in a Moving Pictures Expert Group part 2 Transport Stream (MPEG-2 TS);
analyzing information defined in a stereoscopic service descriptor (SS_descriptor) among descriptors corresponding to the selected program, the descriptors being contained in the PMT;
extracting a reference video from the MPEG-2 TS based on the descriptors corresponding to the selected program;
extracting an additional video from the broadcast receiving apparatus based on the analyzed information, the additional video being stored in advance in the broadcast receiving apparatus; and
synchronizing the extracted reference video with the extracted additional video based on the analyzed information at a time when a playback of a stereoscopic video is started, and displaying the synchronized video.

2. The method of claim 1, wherein the analyzing of the information comprises:
analyzing a service type, the service type defining a type of a stereoscopic service;
analyzing a content name, the content name defining a name of a file from which the additional video is to be extracted; and
analyzing a Non-Real-Time (NRT) marker, the NRT marker representing a start position of the stereoscopic service for synchronization between the reference video and the additional video.

3. The method of claim 1, wherein the extracting of the reference video comprises:
analyzing an Initial Object Descriptor (IOD) among the descriptors corresponding to the selected program;
analyzing an Elementary Stream Descriptor (ESD), the ESD being associated with a Binary Format for Scenes (BIFS) stream and an Object Descriptor (OD) stream;
extracting an elementary identifier from the analyzed ESD, and searching for a sync layer descriptor (SL_descriptor) having the same value as the extracted elementary identifier;
searching for a TS packet from the MPEG-2 TS using a packet ID and a stream type, the TS packet comprising the BIFS stream and the OD stream;
searching for an elementary stream identifier (ES_ID) of the reference video using an object identifier of a video object contained in the BIFS stream; and
extracting a TS packet from the MPEG-2 TS using the ES_ID of the reference video, the TS packet comprising the reference video.

4. The method of claim 1, wherein the reference video is transmitted in real-time to the broadcast receiving apparatus in a stream mode through the MPEG-2 TS, and
wherein prior to transmission of the reference video, the additional video is transmitted to the broadcast receiving apparatus repeatedly for a predetermined period of time by a Multimedia Object Transfer (MOT) carousel according to a MOT protocol, and is stored in a nonvolatile memory of the broadcast receiving apparatus.

5. The method of claim 1, wherein the synchronizing and displaying comprises signaling a first frame position of a stereoscopic video using the NRT marker, the NRT marker being contained in the information defined in the SS_descriptor and representing a start position of the stereoscopic service for synchronization between the reference video and the additional video.

6. The method of claim 5, wherein the synchronizing and displaying comprises synchronizing the extracted reference video with the extracted additional video using a time stamp for an Access Unit (AU) of the reference video, a time stamp for an AU of the additional video, and a Program Clock Reference (PCR) value.

7. A method of performing a stereoscopic service in a broadcast receiving apparatus, the method comprising:
extracting a Program Map Table (PMT) corresponding to a program selected by a user from a Program Association Table (PAT), the PAT being contained in a Moving Pictures Expert Group part 2 Transport Stream (MPEG-2 TS);
analyzing information defined in a stereoscopic service descriptor (SS_descriptor) among descriptors corresponding to the selected program, the descriptors being contained in the PMT;
extracting a reference image from the MPEG-2 TS based on the descriptors corresponding to the selected program;
extracting an additional image from the broadcast receiving apparatus based on the analyzed information, the additional image being stored in advance in the broadcast receiving apparatus; and
synchronizing the extracted reference image with the extracted additional image and displaying the synchronized video.

8. The method of claim 7, wherein the analyzing of the information comprises:
analyzing a service type, the service type defining a type of a stereoscopic service;
analyzing an image name, the image name defining a name of a file from which the additional image is to be extracted; and
analyzing a stereoscopic service image identifier (SS_image_PID) used to define the image name as the name of the file from which the additional image is to be extracted.

9. The method of claim 7, wherein the extracting of the reference image comprises:
analyzing an Initial Object Descriptor (IOD) among the descriptors corresponding to the selected program;
analyzing an Elementary Stream Descriptor (ESD), the ESD being associated with a Binary Format for Scenes (BIFS) stream and an Object Descriptor (OD) stream, the BIFS stream comprising a default BIFS stream and an additional BIFS stream, and the OD stream comprising a default OD stream and an additional OD stream;
extracting an elementary identifier from the analyzed ESD, and searching for a sync layer descriptor (SL_descriptor) having the same value as the extracted elementary identifier;
searching for a TS packet from the MPEG-2 TS using a packet ID and a stream type, the TS packet comprising the BIFS stream and the OD stream;
searching for an elementary stream identifier (ES_ID) of the reference image from the additional OD stream using an object identifier of an image object contained in the BIFS stream; and
extracting a TS packet from the MPEG-2 TS using the ES_ID of the reference image, the TS packet comprising the reference image.

10. The method of claim 7, wherein the reference image is transmitted in real-time to the broadcast receiving apparatus in a stream mode through the MPEG-2 TS, and
wherein prior to transmission of the reference image, the additional image is transmitted to the broadcast receiving apparatus repeatedly for a predetermined period of time by a Multimedia Object Transfer (MOT) carousel according to a MOT protocol, and is stored in a nonvolatile memory of the broadcast receiving apparatus.

11. A method of performing a stereoscopic service in a broadcast receiving apparatus, the method comprising:
extracting a Program Map Table (PMT) corresponding to a program selected by a user from a Program Association Table (PAT), the PAT being contained in a Moving Pictures Expert Group part 2 Transport Stream (MPEG-2 TS) to transmit a content, the content being repeatedly transmitted for a predetermined period of time so that a left image and a right image are alternatingly transmitted as a reference video through the MPEG-2 TS;
analyzing information defined in a stereoscopic service descriptor (SS_descriptor) among descriptors corresponding to the selected program, the descriptors being contained in the PMT;
extracting a reference video from the MPEG-2 TS based on the descriptors corresponding to the selected program;
determining whether an additional video corresponding to the reference video is stored in the broadcast receiving apparatus;
stereoscopically displaying the reference video and the additional video when the additional video is determined to be stored in the broadcast receiving apparatus; and
monoscopically displaying the reference video when the additional video is determined not to be stored in the broadcast receiving apparatus.

12. The method of claim 11, wherein the analyzing of the information comprises:
analyzing a service type, the service type defining a type of a stereoscopic service;
analyzing a content name, the content name defining a name of a file from which the additional video is to be extracted and a name of a file in which the reference video is to be stored;
analyzing a Non-Real-Time (NRT) marker, the NRT marker representing a start position of the stereoscopic service for synchronization between the reference video and the additional video; and
analyzing a file size and an expiration date of the file in which the reference video is to be stored.

13. The method of claim 11, wherein the stereoscopically displaying of the reference video and the additional video comprises:
when the reference video is a left image, extracting the additional video as a right image from the broadcast receiving apparatus and stereoscopically displaying the reference video and the additional video; and
when the reference video is a right image, extracting the additional video as a left image from the broadcast receiving apparatus and stereoscopically displaying the reference video and the additional video.

14. The method of claim 13, wherein the monoscopically displaying of the reference video comprises:
when the reference video is a left image and when the additional video being a right image corresponding to the reference video is not stored in the broadcast receiving apparatus, storing the reference video as the left image in the broadcast receiving apparatus; and
when the reference video is a right image and when the additional video being a left image corresponding to the reference video is not stored in the broadcast receiving apparatus, storing the reference video as the right image in the broadcast receiving apparatus.

15. The method of claim 11, wherein the synchronizing and displaying comprises signaling a first frame position of a stereoscopic video using the NRT marker, the NRT marker being contained in the information defined in the SS_descriptor and representing a start position of the stereoscopic service for synchronization between the reference image and the additional image.

16. The method of claim 15, wherein the synchronizing and displaying comprises synchronizing the extracted reference image with the extracted additional image using a time stamp for an Access Unit (AU) of the reference image, a time stamp for an AU of the additional image, and a Program Clock Reference (PCR) value.
